# EUROPEAN PATENT APPLICATION

(11) **EP 1 972 697 A1**
(43) Date of publication of application: **24.09.2008**
(21) Application number: 08250827.6
(22) Date of filing: 11.03.2008
(51) Int. Cl.: C22C 21/08

(54) **Aluminum alloy in mold for tire and tire mold**

(30) Priority: 23.03.2007 JP 2007077512
(71) Applicant: Bridgestone Corporation, Tokyo 104-8340 (JP)
(72) Inventor: Yano, Masashi, Kodaira-shi, Tokyo 187-8531 (JP)
(74) Representative: Whalley, Kevin

(57) **Abstract**

An aluminum alloy for a tire mold comprises Mg: 3.0-6.0 mass%, Si: 0.2-4.5 mass% and the balance being Al and inevitable impurities.

## Description

### BACKGROUND OF THE INVENTION

### 1. Field of the Invention

This invention relates to an aluminum alloy suitable as a starting material of a tire mold used in the vulcanization building of tires, and more particularly to a casting aluminum alloy and a tire mold comprising such an aluminum alloy.

### 2. Description of the Related Art

A tire mold (hereinafter referred to as "mold" simply), particularly a so-called split mold consisting of plural mold segments is commonly made from an aluminum alloy from a viewpoint of the casting property. As a typical example of the casting aluminum alloy used in the tire mold are known AC2B, AC4C and AC7A defined in JIS H5202 (1992), which is disclosed in NonFerrous Metals of JIS HANDBOOK. These aluminum alloys are easy in the plastic deformation because an elastic limit strain σₑ is as small as 0.04% in AC2B system, 0.10% in AC4C system and 0.12% in AC7A system.

In the mold made of the aluminum alloy, therefore, local deformation is easily caused because the elastic limit strain σₑ is small as compared with that of steel material as a typical example of a mold material.

In the mold for the tire building, since the opening-closing of the mold is carried out every the vulcanization building, the local deformation of the mold is caused in the repeated opening-closing operations, particularly in the fitting of the mold segments. The local deformation results in the deformation of the inner face form of the mold, which brings about the deterioration of RR in the tire or the poor fitting among the mutual mold segments in the split mold and hence disadvantageously produces a rubber-protruded tire.

Such a local deformation of the mold is usually generated in about one year starting from the use in the vulcanization building of the tires, so that it is obliged to conduct the repairing of the mold at a cycle of one year.

### SUMMARY OF THE INVENTION

It is, therefore, an object of the invention to propose a way for enhancing an elastic limit strain of a casting aluminum alloy in order to suppress the local deformation of the mold made of the aluminum alloy.

The construction of the invention is as follows.
(1) An aluminum alloy for a tire mold comprising Mg: 3.0-6.0 mass%, Si: 0.2-4.5 mass% and the balance being Al and inevitable impurities.
(2) An aluminum alloy for a tire mold according to the item (1), which further contains at least one of Cu: not more than 0.10 mass%, Zn: not more than 0.10 mass%, Fe: not more than 0.10 mass%, Mn: not more than 0.10 mass%, Ni: not more than 0.05 mass%, Ti: 0.01-0.30 mass%, Sn: not more than 0.05 mass%, Cr: not more than 0.10 mass%, B: not more than 0.10 mass%, Ag: not more than 0.10 mass% and Ca: not more than 0.10 mass%.
(3) A tire mold for use in vulcanization building of a tire, which comprises an aluminum alloy as described in the item (1) or (2).

According to the invention, the design for enhancing the elastic limit strain can be given to the casting aluminum alloy. Therefore, by using such an aluminum alloy can be improved mechanical properties of a cast mold made of the aluminum alloy, and particularly the local deformation is suppressed during the vulcanization building, and hence it is possible to prolong the service life of the mold.

### DESCRIPTION OF THE PREFERRED EMBODIMENTS

As to the composition of the aluminum alloy according to the invention, the reason of the limitation on the each component is described in detail below.

Mg: 3.0-6.0 mass%
Mg is a solid-solution strengthening element and is included for strengthening the grain boundary with Al-Mg precipitates. Also, Mg having an atomic radius larger than that of Al is inhabited in the crystal grain to form Guinier-Preston zone (GP zone), and the elasticity can be maintained by the GP zone. That is, the GP zone is a stacking fault due to aggregation of solid-solution elements. The solid-solution strengthening by the GP zone appearingly serves as a dispersion strengthening to trap dislocation causing loss of elasticity, and hence the elastic limit increases and the strength rises. For this end, it is required to include nor less than 3.0 mass% of Mg. On the other hand, when the content of Mg exceeds 6.0 mass%, the stable GP zone is not formed and the scattering of the properties inclusive of elastic limit becomes large every the cast lot and further the castability is considerably deteriorated and the precision casting is difficult.

Si: 0.2-4.5 mass%
Si contributes to strengthen the grain boundary by an eutectic system with Al. Since Al-Si eutectic is easily peeled off from Al matrix, it is required that Al-Mg-Si based inclusion is produced at the solidification stage of the casting and bonded to the Al-Si eutectic to prevent the crystal slippage at the grain boundary. For this end, it is required to include not less than 0.2 mass% of Si. Particularly, in order to produce the Al-Mg-Si based inclusion at the solidification stage of the casting, the aforementioned inclusion of not less than 3.0 mass% of Mg is required in addition to not less than 0.2 mass% of Si. That is, the Al-Mg-Si based inclusion produces Al-Mg₂Si fine precipitates, and the Al-Mg₂Si also forms the GP zone to bring about the improvement of the elastic limit likewise the above case. On the other hand, when it exceeds 4.5 mass%, the Al-Mg₂Si is preferentially precipitated in the grain boundary to easily cause embrittlement, so that Si is required to be not more than 4.5 mass%.

The balance other than Mg and Si is Al and inevitable impurities. In the aluminum alloy according to the invention, one or more of Cu, Zn, Fe, Mn, Ni, Ti, Sn, Cr, B, Ag and Ca may be included in addition to the above components, if necessary. Among them, Sn, B, Ca and Cr are existent as an inevitable impurity. A preferable content range of each of these components is as follows.

Cu: not more than 0.10 mass%
Cu is preferably added in an amount of not less than 0.05 mass% in order to stably produce the Al-Mg based GP zone and Al-Mg₂Si based GP zone, but when the addition amount of Cu exceeds 0.10 mass%, the above GP zones are segregated to make the scattering of the properties large, so that the upper limit is 0.10 mass%.

Zn: not more than 0.10 mass%
Zn is is preferably added in an amount of not less than 0.05 mass% in order to stably produce the Al-Mg based GP zone and Al-Mg₂Si based GP zone, but when the addition amount of Zn exceeds 0.10 mass%, there is a fear that Al-Mg₂Si is preferentially precipitated in the grain boundary to induce the intergranular cracking, so that the upper limit is 0.10 mass%.

Fe: not more than 0.10 mass%
A slight amount of Fe added leads to the improvement of elastic limit, so that Fe is preferably added in an amount of not less than 0.05 mass%. However, when the addition amount exceeds 0.10 mass%, the castability is obstructed, so that the upper limit is 0.10 mass%.

Mn: not more than 0.10 mass%
Mn is preferably added in an amount of not less than 0.05 mass% for improving the heat resistance, but when the addition amount exceeds 0.10 mass%, the castability is obstructed, so that the upper limit is 0.10 mass%.

Ni: not more than 0.05 mass%
Ni is preferably added in an amount of not less than 0.03 mass% for improving the heat resistance and elastic limit, but when the addition amount exceeds 0.05 mass%, the castability is obstructed, so that the upper limit is 0.05 mass%.

Ti: 0.01-0.30 mass%
Ti is added in an amount of not less than 0.01 mass% for forming fine grain boundary, but when the addition amount exceeds 0.30 mass%, the effect of forming the fine grain boundary is unchangeable, so that the upper limit is 0.30 mass%.

Sn: not more than 0.05 mass%
Sn is incorporated as an inevitable impurity, but when the content exceeds 0.05 mass%, the castability is obstructed, so that the content is controlled to not more than 0.05 mass%.

Cr: not more than 0.10 mass%
Cr is also incorporated as an inevitable impurity, but when the content exceeds 0.10 mass%, the properties are obstructed, so that the content is controlled to not more than 0.10 mass%.

B: not more than 0.10 mass%
B is also incorporated as an inevitable impurity, but when the content exceeds 0.10 mass%, the properties, particularly elongation are obstructed, so that the content is controlled to not more than 0.10 mass%.

Ag: not more than 0.10 mass%
Ag is preferably added in an amount of not less than 0.01 mass% for making finer the size of the polycrystalline alloy up to nano-size, but when the content exceeds 0.10 mass%, the effect of making the size finer is saturated, so that the upper limit is 0.10 mass%.

Ca: not more than 0.10 mass%
Ca is incorporated as an inevitable impurity, but when the content exceeds 0.10 mass%, the castability is obstructed, so that the content is controlled to not more than 0.10 mass%.

The aluminum alloy having the aforementioned composition is first produced as an ingot, which is cast through a melting furnace and a holding furnace to form a cast slab and then the resulting cast slab is reshaped through elastic and plastic deformations and finally subjected to a machine work to form a mold.

Thus, there can be obtained a mold having an elastic limit strain σₑ of not less than 0.20%. When the vulcanization building of the tire is carried out by using the split mold formed by fitting the mold segments, an average fitting strain is 0.04-0.07%, but the end face is locally deformed in the fitting of the mold segments to generate strain input corresponding to 2-3 times of the average fitting strain. Therefore, in order to attain the fitting at an elastic zone, the material used for the mold is required to have an elastic limit strain of 0.08-0.21%, and hence the elastic fitting is attained when the elastic limit strain as the mold is not less than 0.20%.

### Examples

Each of mold segments used for the vulcanization building of a passenger car tire having a tire size of 225/60 R15 is cast from an aluminum alloy having a chemical composition shown in Table 1 under conditions shown in Table 2. As regards the castability, the state of generating cast cavities is examined under a proper casting design. In this case, the casting design is a gravity casting with a chill type ring of one sprue.

Then, the elastic limit strain is measured with respect to the resulting molds. Furthermore, the vulcanization building of tires is conducted through the above molds under the following conditions over a long time of period to measure spue generating ratio and mold repairing cycle after the use period of one year. The measured results are shown in Table 3.

Conditions of tire vulcanization building (gas vulcanization)
- platen/jacket temperature: 180°C/180°C
- initial stage of vulcanization: steam, pressure 1.67 MPa (17 kgf/cm²), 2.5 minutes
- middle stage of vulcanization: inert gas (N₂ gas), pressure 2.06 MPa (21 kgf/cm²), 12 minutes
- last stage of vulcanization: evacuation of inert gas up to a pressure of 0.34 MPa (3.5 kgf/cm²) for 1 minute

Moreover, the ratio of generating cast cavities under the proper casting design is evaluated by a man-hour for repairing cavities, in which a case that the man-hour required for repairing one set of cavities is less than 4 hours is a small ratio (○), a case that the man-hour is 4-8 hours is a middle ratio (Δ) and a case that the man-hour exceeds 8 hours is a large ratio (× ).

The elastic limit strain is a proportional limit strain determined from a stress-strain curve obtained by a tensile test of a JIS No. 4 test piece.

The spue generating ratio is a ratio of molds generating spues among 10 molds. In this case, the spue-generated mold is determined when spues of not less than 1 mm are generated in the fitted portion between mold segments in the mold.

Also, the mold repairing cycle means a cycle required for repairing the spue-generated mold in the continuous use of the mold, which is evaluated from the mold-repairing result.

**Table 1**

| (mass%) | | | | | | | | | | | | | | |
|---|---|---|---|---|---|---|---|---|---|---|---|---|---|---|
| Alloy No. | Mg | Si | Cu | Zn | Fe | Mn | Ni | Ti | Sn | Cr | B | Ag | Ca | Remarks |
| A | 4.0 | 1.0 | 0.1 | 0.1 | 0.1 | 0.1 | 0.05 | 0.05 | 0.05 | 0.1 | 0.1 | 0.1 | 0.01 | Invention Example |
| B | 4.0 | 0.1 | 0.1 | 0.1 | 0.1 | 0.1 | 0.05 | 0.05 | 0.05 | 0.1 | 0.1 | 0.01 | 0.01 | Comparative Example (corresponding to AC7A) |
| C | 3.0 | 0.2 | 0.1 | 0.1 | 0.1 | 0.1 | 0.05 | 0.05 | 0.05 | 0.1 | 0.1 | 0.1 | 0.01 | Invention Example |
| D | 6.0 | 4.5 | 0.1 | 0.1 | 0.1 | 0.1 | 0.05 | 0.05 | 0.05 | 0.1 | 0.1 | 0.1 | 0.01 | Invention Example |
| E | 3.0 | 4.5 | 0.1 | 0.1 | 0.1 | 0.1 | 0.05 | 0.05 | 0.05 | 0.1 | 0.1 | 0.1 | 0.01 | Invention Example |
| F | 6.0 | 0.2 | 0.1 | 0.1 | 0.1 | 0.1 | 0.05 | 0.05 | 0.05 | 0.1 | 0.1 | 0.1 | 0.01 | Invention Example |
| G | 4.0 | 3.0 | 0.1 | 0.1 | 0.1 | 0.1 | 0.05 | 0.05 | 0.05 | 0.1 | 0.1 | 0.1 | 0.1 | Invention Example |
| H | 2.0 | 0.2 | 0.1 | 0.1 | 0.1 | 0.1 | 0.05 | 0.05 | 0.05 | 0.1 | 0.1 | 0.1 | 0.1 | Comparative Example |
| I | 6.0 | 5.0 | 0.1 | 0.1 | 0.1 | 0.1 | 0.05 | 0.05 | 0.05 | 0.1 | 0.1 | 0.1 | 0.1 | Comparative Example |
| J | 2.0 | 4.5 | 0.1 | 0.1 | 0.1 | 0.1 | 0.05 | 0.05 | 0.05 | 0.1 | 0.1 | 0.1 | 0.1 | Comparative Example |
| K | 7.0 | 0.2 | 0.1 | 0.1 | 0.1 | 0.1 | 0.05 | 0.05 | 0.05 | 0.1 | 0.1 | 0.1 | 0.1 | Comparative Example |
| L | 7.0 | 4.5 | 0.1 | 0.1 | 0.1 | 0.1 | 0.05 | 0.05 | 0.05 | 0.1 | 0.1 | 0.1 | 0.1 | Comparative Example |
| M | 7.0 | 0.1 | 0.1 | 0.1 | 0.1 | 0.1 | 0.05 | 0.05 | 0.05 | 0.1 | 0.1 | 0.1 | 0.1 | Comparative Example |
| N | 7.0 | 5.0 | 0.1 | 0.1 | 0.1 | 0.1 | 0.05 | 0.05 | 0.05 | 0.1 | 0.1 | 0.1 | 0.1 | Comparative Example |

**Table 2**

| Sample No. | Alloy symbol for mold | | | Cover chill temperature (°C) | Remarks |
|---|---|---|---|---|---|
| | | Casting temperature (°C) | Casting rate (kgf/min) | | |
| 1 | A | 720 | 100 | 300 | Invention Example |
| 2 | B | 720 | 100 | 300 | Comparative Example |
| 3 | C | 720 | 100 | 300 | Invention Example |
| 4 | D | 720 | 100 | 300 | Invention Example |
| 5 | E | 720 | 100 | 300 | Invention Example |
| 6 | F | 720 | 100 | 300 | Invention Example |
| 7 | G | 720 | 100 | 300 | Invention Example |
| 8 | H | 720 | 100 | 300 | Comparative Example |
| 9 | I | 720 | 100 | 300 | Comparative Example |
| 10 | J | 720 | 100 | 300 | Comparative Example |
| 11 | K | 720 | 100 | 300 | Comparative Example |
| 12 | L | 720 | 100 | 300 | Comparative Example |
| 13 | M | 720 | 100 | 300 | Comparative Example |
| 14 | N | 720 | 100 | 300 | Comparative Example |

**Table 3**

| Sample No. | Alloy symbol for mold | Castability | Elastic limit strain σₑ (%) | Spue generating ratio (%) | Mold repairing cycle (years) | Remarks |
|---|---|---|---|---|---|---|
| | | Evaluation for generating cast cavities | | | | |
| 1 | A | ○ | 0.24 | 10 | 5 | Invention Example |
| 2 | B | × | 0.08 | 30 | 2 | Comparative Example |
| 3 | C | ○ | 0.25 | 12 | 5 | Invention Example |
| 4 | D | ○ | 0.26 | 8 | 5 | Invention Example |
| 5 | E | ○ | 0.25 | 10 | 5 | Invention Example |
| 6 | F | ○ | 0.28 | 5 | 5 | Invention Example |
| 7 | G | ○ | 0.27 | 5 | 5 | Invention Example |
| 8 | H | × | 0.06 | 40 | 1 | Comparative Example |
| 9 | I | × | 0.25 | 12 | 5 | Comparative Example |
| 10 | J | Δ | 0.07 | 30 | 2 | Comparative Example |
| 11 | K | × | 0.26 | 8 | 2 | Comparative Example |
| 12 | L | Δ | 0.28 | 5 | 5 | Comparative Example |
| 13 | M | × | 0.09 | 25 | 1.5 | Comparative Example |
| 14 | N | × | 0.27 | 5 | 5 | Comparative Example |

## Claims

1. An aluminum alloy for a tire mold comprising Mg: 3.0-6.0 mass%, Si: 0.2-4.5 mass% and the balance being Al and inevitable impurities.

2. An aluminum alloy for a tire mold according to claim 1, which further contains at least one of Cu: not more than 0.10 mass%, Zn: not more than 0.10 mass%, Fe: not more than 0.10 mass%, Mn: not more than 0.10 mass%, Ni: not more than 0.05 mass%, Ti: 0.01-0.30 mass%, Sn: not more than 0.05 mass%, Cr: not more than 0.10 mass%, B: not more than 0.10 mass%, Ag: not more than 0.10 mass% and Ca: not more than 0.10 mass%.

3. A tire mold for use in vulcanization building of a tire, which comprises an aluminum alloy as claimed in claim 1 or 2.
